# EUROPEAN PATENT APPLICATION

(11) **EP 2 738 906 A2**
(43) Date of publication of application: **04.06.2014**
(21) Application number: 13193942.3
(22) Date of filing: 21.11.2013
(51) Int. Cl.: H02J 3/38

(54) **System and method for controlling a power generation system**

(30) Priority: 30.11.2012 US 201213689897
(71) Applicant: General Electric Company, Schenectady, New York 12345 (US)
(72) Inventor: Schelenz, Owen Jannis Samuel, Niskayuna, NY New York 12309 (US)
(74) Representative: Picker, Madeline Margaret

(57) **Abstract**

A power generation system 10 including photovoltaic modules 12 for generating DC power and power converters 16 coupled to the photovoltaic modules 12 for converting the DC power to AC power is provided. The power generation system 10 also includes a central controller 22 that executes the steps of determining a real time AC power generation capacity of the power converters 16, determining a difference between a required AC power generation capacity and the real time AC power generation capacity, identifying a real time AC voltage of each of the power converters 16, identifying a reserve AC current capacity of each of the power converters 16 based on the real time AC voltage and an AC current rating of each of the power converters 16 and using the reserve AC current capacity to generate reserve power for reducing the difference between the required AC power generation capacity and the real time AC power generation capacity.

## Description

Embodiments of the invention generally relate to a power generation system and, more particularly, to a system and method for controlling a photovoltaic power generation system.

With the rising cost and scarcity of conventional energy sources and concerns about the environment, there is a significant interest in alternative energy sources such as solar power and wind power. Solar power generation uses photovoltaic sources to generate electricity from the sun. Multiple photovoltaic sources are electrically coupled to one another in such systems to generate electricity. The electricity is supplied to utilities via a power distribution network including a power grid.

The power generation systems include photovoltaic modules that generate DC power based on exposure to the sun. The power generation systems also include power converters that convert the DC power to AC power which is provided to the power grid. In many grid interconnect agreements, power providers agree that the power converters will generate a certain level of power when operating at full capacity. The power rating of the power converters is typically provided such that the power converters operate at full capacity within a predefined tolerance level of voltage by providing additional current in the power generation system or reducing current from the power generation system based on a current rating of the power conversion system. In situations wherein the power converters are able to generate power which is more than the required power at a particular voltage, the power converters reduce the current component of the AC power to provide constant AC power to the power grid.

The inventors of the present invention have discovered that the reduced portion of the current component is left unused which leads to undesirable losses, and hence the inventors herein present embodiments wherein such reduced portion of the current component is used.

Briefly, in accordance with one embodiment, a power generation system is provided. The power generation system includes photovoltaic modules for generating DC power and power converters coupled to the photovoltaic modules for converting the DC power to AC power. The power generation system also includes a central controller coupled to the power converters. The central controller executes the steps of determining a real time AC power generation capacity of the power converters, determining a difference between a required AC power generation capacity and the real time AC power generation capacity, identifying a real time AC voltage of each of the power converters, identifying a reserve AC current capacity of each of the power converters based on the real time AC voltage and an AC current rating of each of the power converters, and using the reserve AC current capacity to generate AC reserve power for reducing the difference between the required AC power generation capacity and the real time AC power generation capacity.

In another embodiment, a method for regulating a power generation capacity of a power generation system is provided. The method includes determining a real time AC power generation capacity of power converters in a power generation system. The method also includes determining a difference between a required AC power generation capacity and the real time AC power generation capacity. The method further includes identifying a real time AC voltage of each of the power converters of the power generation system. The method also includes identifying a reserve AC current capacity of each of the power converters based on the real time AC voltage and an AC current rating of the power converters. The method further includes using the reserve AC current capacity to generate reserve AC power for reducing the difference between the required AC power generation capacity and the real time AC power generation capacity.

These and other features, aspects, and advantages of the present invention will become better understood when the following detailed description is read with reference to the accompanying drawings in which like characters represent like parts throughout the drawings, wherein:
FIG. 1 is a block diagram representation of a power generation system in accordance with an embodiment of the invention.
FIG. 2 is a block diagram representation of another embodiment of the power generation system in accordance with another embodiment of the invention.
FIG. 3 is a flow chart representing the steps involved in a method for regulating a power generation capacity of a power generation system in accordance with an embodiment of the invention.

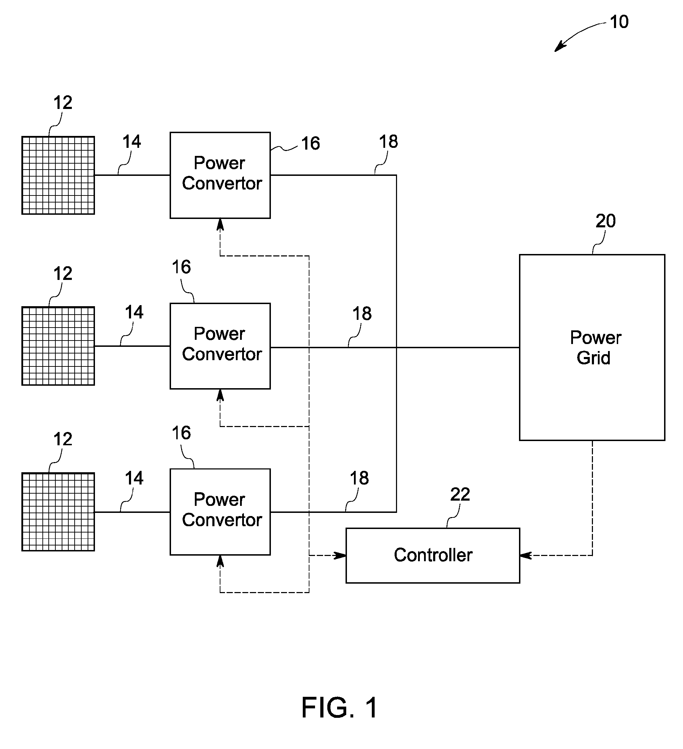

FIG. 1 is a block diagram representation of a power generation system 10 in accordance with an embodiment of the invention. The power generation system 10 includes photovoltaic modules 12 for generating DC power and power converters 16 coupled to the photovoltaic modules 12 for converting the DC power to AC power. The power generation system 10 also includes a central controller 22 coupled to the power converters 16. The central controller 22 executes the steps of determining a real time AC power generation capacity of the power converters, determining a difference between a required AC power generation capacity and the real time AC power generation capacity, identifying a real time AC voltage of each of the power converters, identifying a reserve AC current capacity of each of the power converters based on the real time AC voltage and an AC current rating of each of the power converters and using the reserve AC current capacity to generate reserve AC power for reducing the difference between the required AC power generation capacity and the real time AC power generation capacity.

In one embodiment, the power rating of the photovoltaic modules 12 is determined based on a DC to AC ratio of the power generation system 10. The DC to AC ratio is defined as the ratio of a DC nameplate power rating of the photovoltaic modules 12 at standard test conditions (STC) to the AC nameplate output power rating of the power converter 16 and may be represented as DC to AC ratio = photovoltaic modules at STC power rating/ power converter nameplate rating. The DC to AC ratio is generally kept more than hundred percent to increase the availability of DC power at a relative irradiance. In other words, the amount of DC power available at a particular irradiance level would be more at a DC-AC ratio of more than one hundred percent than the amount of DC power available at the same irradiance level if the DC-AC ration is less than one hundred percent.

The power converters 16 in the power generation system 10 are configured to operate such that the power converters 16 are able to provide the nameplate rated AC power within a range of about ten percent below a nominal AC voltage to about ten percent above the nominal AC voltage. The real time AC voltages of the power converters 16 have to be within the aforementioned range to provide the name plate rate AC power to a power grid 20. In other words, the power converters 16 are configured to provide the rated AC power at ninety percent (90%) of the nominal AC voltage and also at hundred and ten percent (110%) of the nominal AC voltage where the nominal AC voltage is hundred percent (100%). The AC power 18 at the output of the power converters 16 is a product of AC voltage and AC current. In one example, if the AC voltage is at ninety percent of the nominal AC voltage, then the AC current may be increased to the maximum value equal to the AC current rating to provide the required AC power to the power grid 20.

The power converters 16 are coupled to the central controller 22 that controls the operations of the power converters 16. In one embodiment, the central controller 22 may comprise a dedicated remote controller. In another embodiment, the central controller may comprise a local controller embedded in any of the power converters 16 that sends commands to the other local controllers in the power generation system 10. The central controller 22 communicates with all the power converters 16 and obtains individual operating parameters of the power converters 16. In one embodiment, the individual operating parameters may include DC voltage, AC current, and AC voltage.

The central controller 22 obtains signals representative of a real time AC power generation capacity of each of the power converters 16 and determines the real time AC power generation capacity of the power generation system 10 by adding the real time AC power generation capacity of the individual power converters 16. The central controller 22 also obtains the signals representative of the individual operating parameters which include for example, voltage, current and a clipping status of the power converters 16 which may be used for power generation system 10 level controls. A required AC power generation capacity of the power generation system 10 may be predefined based on interconnect agreements or may vary based on utility or other operator commands The central controller 22 determines a difference between the required AC power generation capacity and the real time AC power generation capacity of the power generation system 10. The central controller 22 obtains the real time AC voltage of the each of the power converters 16 and determines a reserve AC current capacity of each of the power converters 16 based on the real time AC voltage and the AC current rating of each of the power converters 16. As described above, in one embodiment, the power converters 16 are configured to provide the rated AC power at ninety percent of the nominal AC voltage by providing reserve AC current equal to the maximum of the AC current rating of the power converter 16. In this embodiment, if the AC voltage is more than ninety percent of the nominal AC voltage, the power converters 16 will have the reserve AC current capacity. In other words, a higher AC voltage will require less AC current to provide the same amount of AC power.

When the power converter 16 is providing less AC current in the power generation system 10 than its rated AC current capacity, the power converters 16 can be controlled to boost the AC power 18 by providing reserve AC power in the power generation system 10. The reserve AC current capacity is a difference between the AC current rating of the power converter 16 and the real time AC current in the power converter. The real time AC current may be determined using the real time AC voltage and the real time AC power 18. The central controller 22 uses the reserve AC current capacity to generate reserve AC power that reduces the difference between the required AC power generation capacity and the real time AC power generation capacity.

The central controller 22 communicates with individual power converters 16 to determine the reserve AC current capacity for each of the power converter 16 and controls the power converters 16 to generate the reserve AC power to reduce the difference. The central controller 22 may choose one or more power converters 16 having the reserve AC current capacity to generate the reserve power based on the difference and the reserve AC current capacity of the individual power converters 16. However, due to the DC to AC ratio being more than hundred percent, some of the power converters 16 may be clipping AC power 18 to provide the required AC power. As used herein "clipping" means reducing the AC power 18 to provide the required AC power in situations where the DC power generated by the photovoltaic modules 12 coupled to one or more power converters 16 is higher than the AC power rating of the respective power converters 16. In such situations the central controller 22 uses a trial and error method to control the power converters 16 for generating the reserve AC power. The central controller 22 may request either one or more of the power converters 16 sequentially or simultaneously to provide the reserve AC power to reduce the difference.

In situations where the central controller 22 requests the power converters sequentially, the central controller 22 requests one of the power converters 16 to provide the reserve AC power to reduce the difference. If the respective power converter 16 is able to provide the whole reserve AC power required to reduce the difference, then the central controller 22 controls the operations of the respective power converter 16 to provide the same. However, if the respective power converter 16 is unable to provide the required reserve AC power, the central controller 22 communicates with one of the remaining power converter 16 to provide the remaining portion of the reserve AC power to the power generation system 10. Similarly, until the reserve AC power requirement is met through the power converters 16, the central controller 22 continues to request each of the power converters 16 individually.

Alternatively, in situations where the central controller 22 requests the one or more of the power converters 16 simultaneously for providing reserve AC power, the central controller 22 determines the reserve AC power required to reduce the difference and requests a portion of the reserve AC power from each of the power converters 16. If any of the power converters 16 is unable to provide the requested portion of the reserve AC power, the central controller requests less of the reserve AC power from that particular power converter in comparison to the previously requested portion. However, if the other power converters 16 are able to provide the requested portion of reserve AC power, the central controller 22 further requests for an increased portion of the reserve AC power from those other power converters. The central controller 22 continues the aforementioned steps till the central controller 22 determines the reserve AC power generation capability of each of the power converters 16.

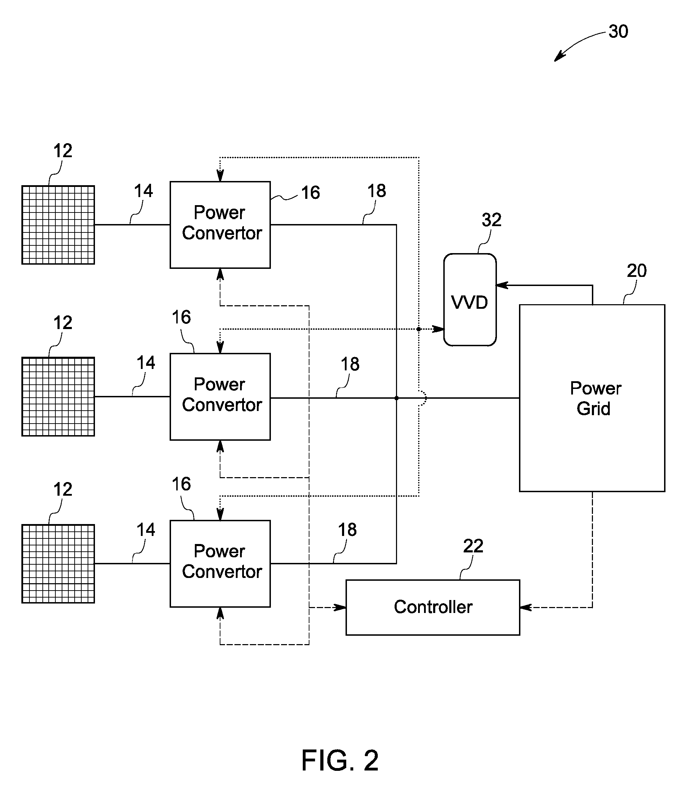

FIG. 2 is a block diagram representation of another embodiment of the power generation system 30 including a voltage varying device 32. The voltage varying device 32 (VVD) may comprise, for example, a tap transformer, a capacitor bank, or a reactive power compensation system. The voltage varying device 32 is coupled to the power converters 16 and may be used to vary the real time AC voltage to change the real time AC power 18 to be equal to the required AC power. In a particular embodiment, the voltage varying device 32 increases the real time AC voltage of a respective power converter 16 if the real time AC voltage is below a nominal AC voltage to generate the reserve AC current capacity. The central controller 22 determines the real time AC voltage of the power converters and, based on the real time AC voltage, the central controller controls the operation of the voltage varying device 32 to increase the real time AC voltage of the respective power converters. Different voltage varying devices 32 use different approaches to increase the real time AC voltage of the power converters. Some examples of the voltage varying device 32 and their operation are discussed below.

One example of the voltage varying device 32 includes the tap transformer that is controlled by the central controller 22. The tap transformer is configured to either step up or step down the real time AC voltage of the power converters. The central controller 22 based on a required real time AC voltage controls the tap transformer to step up or step down the real time AC voltage of the power converters.

Another example of the voltage varying device 32 includes a capacitor bank or a reactive power compensation system which increases the real time AC power of the power converters 16 using reactive power that is provided by the capacitors banks and/or the reactive power compensation systems. A leading reactive power is provided to the power converters 16 which increases the real time AC power of the power converters 16. The central controller 22 based on the required real time AC voltage controls the capacitors and/or the reactive power compensation system and allows only a required amount of reactive power to be provided to the AC power generation system 10.

In another example, the power converters 16 may generate a reactive power by providing a leading reactive current that is used to control various parameters of the power generation system 10 such as power factor, AC voltage, and/or frequency, for example. The reactive power generated by the power converters 16 is used to mitigate some of the intermittent requests provided by the utility for providing AC power with requested parameters. In one embodiment, the reactive power generated by the power converters 16 may also be used for power generation system 10 level grid integrations.

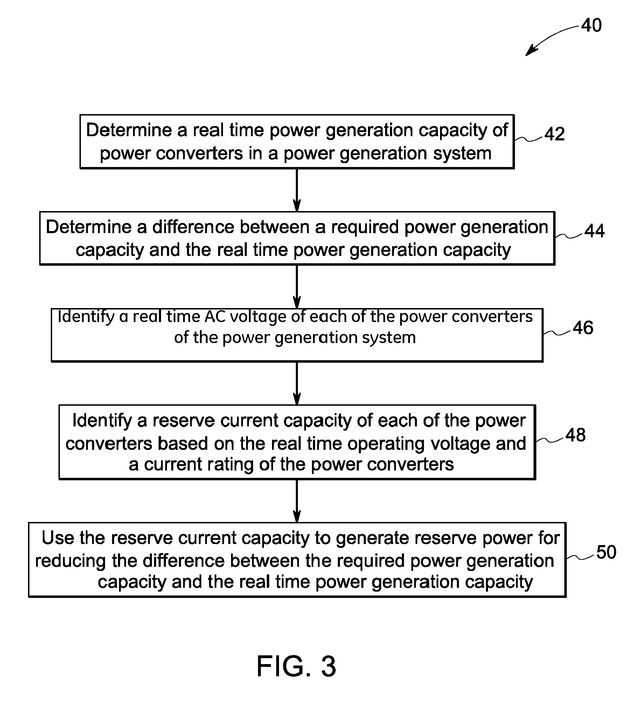

FIG. 3 is a flow chart representing the steps involved in a method 40 for regulating an AC power generation capacity of a power generation system in accordance with an embodiment of the invention. The method 40 includes determining a real time AC power generation capacity of power converters in a power generation system in step 42. The method 40 also includes determining a difference between a required AC power generation capacity and the real time AC power generation capacity in step 44. The method 40 further includes identifying a real time AC voltage of each of the power converters of the power generation system in step 46. In a specific embodiment, operating at the required power generation capacity comprises operating within a range of about ten percent below a nominal AC voltage to about ten percent above the nominal AC voltage. In one embodiment (not shown), the method 40 further includes varying the real time AC voltage of the power converters. In another embodiment, varying the real time AC voltage comprises varying the AC voltage using tap transformers, capacitor banks or reactive power compensation systems. In a more specific embodiment, varying the real time AC voltage of the power converters comprises increasing the real time AC voltage of the power converters if the real time AC voltage is below a nominal AC voltage to generate reserve AC current capacity.

The method 40 also includes identifying a reserve AC current capacity of each of the power converters based on the real time AC voltage and an AC current rating of the power converters in step 48. The method 40 further includes using the reserve AC current capacity to generate reserve AC power for reducing the difference between the required AC power generation capacity and the real time AC power generation capacity in step 50.

It is to be understood that a skilled artisan will recognize the interchangeability of various features from different embodiments and that the various features described, as well as other known equivalents for each feature, may be mixed and matched by one of ordinary skill in this art to construct additional systems and techniques in accordance with principles of this disclosure. It is, therefore, to be understood that the appended claims are intended to cover all such modifications and changes as fall within the true spirit of the invention.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A power generation system comprising:
   photovoltaic modules for generating DC power;
   power converters for converting the DC power to AC power; and
   a central controller coupled to the power converters for executing the steps of:
      determining a real time AC power generation capacity of the power converters;
      determining a difference between a required AC power generation capacity and the real time AC power generation capacity;
      identifying a real time AC voltage of each of the power converters;
      identifying a reserve AC current capacity of each of the power converters based on the real time AC voltage and an AC current rating of each of the power converters; and
      using the reserve AC current capacity to generate reserve AC power for reducing the difference between the required AC power generation capacity and the real time AC power generation capacity.
2. The power generation system of clause 1, further comprising an AC voltage varying device for varying the real time AC voltage of the power converters.
3. The power generation system of any preceding clause, wherein the AC voltage varying device comprises a tap transformer, a capacitor bank, or a reactive power compensation system.
4. The power generation system of any preceding clause, wherein the AC voltage varying device increases the real time AC voltage of a respective power converter if the real time AC voltage is below a nominal AC voltage to generate the reserve AC current capacity.
5. The power generation system of any preceding clause, wherein the power converters operate at the required power generation capacity within a range of about ten percent below a nominal AC voltage to about ten percent above the nominal AC voltage.
6. The power generation system of any preceding clause, wherein the photovoltaic modules and the power converters are coupled together based on a DC-AC ratio.
7. A method comprising:
   determining a real time AC power generation capacity of power converters in a power generation system;
   determining a difference between a required AC power generation capacity and the real time AC power generation capacity;
   identifying a real time AC voltage of each of the power converters of the power generation system;
   identifying a reserve AC current capacity of each of the power converters based on the real time AC voltage and an AC current rating of the power converters; and
   using the reserve AC current capacity to generate reserve AC power for reducing the difference between the required AC power generation capacity and the real time AC power generation capacity.
8. The method of any preceding clause, further comprising operating the power converters at the required AC power generation capacity with a nominal AC voltage within a range of about ten percent below the nominal AC voltage to about ten percent above the nominal AC voltage.
9. The method of any preceding clause, further comprising varying the real time AC voltage of the power converters.
10. The method of any preceding clause, wherein varying the real time AC voltage comprises varying the AC voltage using tap transformers, capacitor banks or reactive power compensation systems.
11. The method of any preceding clause, wherein varying the real time AC voltage of the power converters comprises increasing the real time AC voltage of the power converters if the real time AC voltage is below a nominal AC voltage to generate reserve AC current capacity.

## Claims

1. A power generation system (10; 30) comprising:
photovoltaic modules (12) for generating DC power;
power converters (16) for converting the DC power to AC power; and
a central controller (22) coupled to the power converters (16) for executing the steps of:
determining a real time AC power generation capacity of the power converters (16);
determining a difference between a required AC power generation capacity and the real time AC power generation capacity;
identifying a real time AC voltage of each of the power converters (16);
identifying a reserve AC current capacity of each of the power converters (16) based on the real time AC voltage and an AC current rating of each of the power converters (16); and
using the reserve AC current capacity to generate reserve AC power for reducing the difference between the required AC power generation capacity and the real time AC power generation capacity.

2. The power generation system of claim 1, further comprising an AC voltage varying device (32) for varying the real time AC voltage of the power converters.

3. The power generation system of claim 2, wherein the AC voltage varying device (32) comprises a tap transformer, a capacitor bank, or a reactive power compensation system.

4. The power generation system of claim 2 or claim 3, wherein the AC voltage varying device increases the real time AC voltage of a respective power converter (16) if the real time AC voltage is below a nominal AC voltage to generate the reserve AC current capacity.

5. The power generation system of any preceding claim, wherein the power converters (16) operate at the required power generation capacity within a range of about ten percent below a nominal AC voltage to about ten percent above the nominal AC voltage.

6. The power generation system of any preceding claim, wherein the photovoltaic modules (12) and the power converters (16) are coupled together based on a DC-AC ratio.

7. A method (40) comprising:
determining (42) a real time AC power generation capacity of power converters in a power generation system;
determining (44) a difference between a required AC power generation capacity and the real time AC power generation capacity;
identifying (46) a real time AC voltage of each of the power converters of the power generation system;
identifying (48) a reserve AC current capacity of each of the power converters based on the real time AC voltage and an AC current rating of the power converters; and
using (50) the reserve AC current capacity to generate reserve AC power for reducing the difference between the required AC power generation capacity and the real time AC power generation capacity.

8. The method of claim 7, further comprising operating the power converters at the required AC power generation capacity within a range of about ten percent below a nominal AC voltage to about ten percent above the nominal AC voltage.

9. The method of claim 7 or claim 8, further comprising varying the real time AC voltage of the power converters.

10. The method of claim 9, wherein varying the real time AC voltage comprises varying the AC voltage using tap transformers, capacitor banks or reactive power compensation systems.

11. The method of claim 9 or claim 10, wherein varying the real time AC voltage of the power converters comprises increasing the real time AC voltage of the power converters if the real time AC voltage is below a nominal AC voltage to generate reserve AC current capacity.
